# EUROPÄISCHE PATENTSCHRIFT

(11) **EP 4 368 842 B1**
(45) Veröffentlichungstag und Bekanntmachung des Hinweises auf die Patenterteilung: **23.07.2025**
(21) Anmeldenummer: 23205085.6
(22) Anmeldetag: 23.10.2023
(51) Int. Cl.: F15B 19/00, B66F 9/22, F15B 21/045, G01D 18/00, G01F 25/10

(54) **MOBILE ARBEITSMASCHINE, INSBESONDERE FLURFÖRDERZEUG**
MOBILE WORKING MACHINE, IN PARTICULAR INDUSTRIAL TRUCK
MACHINE DE TRAVAIL MOBILE, EN PARTICULIER CHARIOT DE MANUTENTION

(30) Priorität: 08.11.2022 DE 102022129473
(43) Veröffentlichungstag der Anmeldung: 15.05.2024
(73) Patentinhaber: Linde Material Handling GmbH, 63743 Aschaffenburg (DE)
(72) Erfinder: KNECHTEL, Ulrich, 63906 Erlenbach a. Main (DE); BAVENDIECK, Rainer, 21465 Wentorf (DE); RICHTER, Daniel, 63739 Aschaffenburg (DE)
(74) Vertreter: Patentship Patentanwaltgesellschaft

(56) Entgegenhaltungen:
- DE-A1- 10 021 823
- DE-B4- 102009 056 673
- US-A1- 2011 126 608
- US-A1- 2014 165 692
- US-B2- 11 209 029
- US-B2- 9 170 143

## Beschreibung

Die Erfindung betrifft eine mobile Arbeitsmaschine, insbesondere Flurförderzeug, mit mindestens einem hydraulischen Verbraucher, wobei eine Hydraulikpumpe vorgesehen ist, die den Verbraucher mit Hydraulikflüssigkeit versorgt, wobei eine elektronische Steuereinrichtung vorgesehen ist, die mit einem in einer Förderleitung der Hydraulikpumpe angeordneten Volumenstromsensor in Verbindung steht, wobei die elektronische Steuereinrichtung ausgebildet ist, anhand des Signals des Volumenstromsensors den von der Hydraulikpumpe geförderten Volumenstrom zu ermitteln.

Bei mobilen Arbeitsmaschinen, beispielsweise Flurförderzeugen, ist es bekannt, bei der Betätigung eines oder mehrerer hydraulischer Verbraucher die die Verbraucher mit Hydraulikflüssigkeit versorgende Hydraulikpumpe, die als Konstantpumpe mit einem konstanten Fördervolumen oder als Verstellpumpe mit einem veränderbaren Fördervolumen ausgebildet sein kann, derart zu betreiben, dass die Hydraulikpumpe ein Überangebot an hydraulischer Energie zur Verfügung stellt, so dass die Versorgung der angesteuerten Verbraucher unter allen Betriebsbedingungen sichergestellt werden kann. Aufgrund des Überangebots an hydraulischer Energie muss diejenige Energie, die den Bedarf der angesteuerten Verbraucher übersteigt, beispielsweise mittels einer Druckwaage zum Behälter abgedrosselt werden, wodurch Energieverluste entstehen und eine unerwünschte Erwärmung der Hydraulikflüssigkeit auftritt. Hierbei werden Load-Sensing-Regelungen und Drehzahlregelungen der Hydraulikpumpe eingesetzt, wobei Erfahrungswerte für Verschleiß und Fertigungsstreuungen der Hydraulikpumpe als Überangebot vorgehalten werden.

Bei mobilen Arbeitsmaschinen, beispielsweise Flurförderzeugen, ist es weiterhin bekannt, in einer Förderleitung der Hydraulikpumpe einen Volumenstromsensor, beispielsweise ein Volumenstrommessgerät, anzuordnen, mit dem der exakte von der Hydraulikpumpe geförderte Volumenstroms ermittelt werden kann, den die Hydraulikpumpe zur Versorgung der angesteuerten Verbraucher liefert. Der mit dem Volumenstromsensor ermittelte Volumenstrom der Hydraulikpumpe wird zur Regelung der Pumpenmotordrehzahl und bei der Ausführung der Hydraulikpumpe als Verstellpumpe zur Pumpenverstellung genutzt, so dass bei der Betätigung eines oder mehrerer Verbraucher stets nur der von den Verbrauchern angeforderte Volumenstrom von der Hydraulikpumpe gefördert wird und die Energieverluste minimiert werden können.

Für die Anwendung in mobilen Arbeitsmaschinen, beispielsweise Flurförderzeugen, gut geeignet als Volumenstromsensor sind Volumenstrommessgeräte auf Basis einer Messturbine, bei dem die Drehzahl eines Messrads, beispielsweise eines Flügelrads, das in der Hydraulikflüssigkeit dreht, gemessen wird. Derartige Volumenstromsensoren auf Basis einer Messturbine beanspruchen im Vergleich zu zahnradbasierten Volumenstromsensoren wenig Bauraum und weisen im Vergleich zu zahnradbasierten Volumenstromsensoren eine hohe Messdynamik sowie geringe Durchflussverluste auf und sind kostengünstiger. Nachteilig bei einem Volumenstromsensor auf Basis einer Messturbine ist die Abhängigkeit des Messergebnisses des Volumenstromsensors von der aktuellen Viskosität der Hydraulikflüssigkeit während des Messvorgangs, da die benutzte Hydraulikflüssigkeit mit ihren Viskositätseigenschaften in Kombination mit der Temperatur der Hydraulikflüssigkeit einen deutlichen Einfluss auf das Messergebnis hat. Hintergrund hierfür ist, dass ein Volumenstromsensor auf Basis einer Messturbine bei einer konkreten Viskosität kalibriert wird. Mit sinkender Viskosität der Hydraulikflüssigkeit ermittelt ein als Messturbine ausgebildeter Volumenstromsensor zu niedrige Volumenströme, was über die Pumpenregelung der Hydraulikpumpe zu zu großen von der Hydraulikpumpe geförderten Volumenströmen und damit einhergehenden Energieverlusten führt. Mit steigender Viskosität der Hydraulikflüssigkeit ermittelt ein als Messturbine ausgebildeter Volumenstromsensor zu hohe Volumenströme, was über die Pumpenregelung der Hydraulikpumpe zu zu kleinen von der Hydraulikpumpe geförderten Volumenströmen und damit zu einer Unterversorgung der angesteuerten Verbraucher führt. Bei einem als hydraulische Lenkungseinrichtung ausgebildeten Verbraucher ist eine Unterversorgung der Lenkungseinrichtung mit Druckmittel zu vermeiden.

Im Betrieb einer mobilen Arbeitsmaschine, beispielsweise eines Flurförderzeugs, unterliegt die Hydraulikflüssigkeit üblicherweise starken Temperaturschwankungen und damit kommt es zu entsprechend großen Abweichungen der Messergebnisse eines als Messturbine ausgebildeten Volumenstromsensors. Sofern das Temperatur-Viskositätsverhalten der benutzen Hydraulikflüssigkeit bekannt ist, kann mittels Messung der aktuellen Temperatur der Hydraulikflüssigkeit auf deren aktuelle Viskosität geschlossen werden und das Messergebnis des als Messturbine ausgebildeten Volumenstromsensors mittels eines Korrekturfaktors berichtigt werden, um die Auswirkungen der Viskosität der verwendeten Hydraulikflüssigkeit auf das Messergebnis des als Messturbine ausgebildeter Volumenstromsensors zu verringern. Diese Abhängigkeit vom Temperatur-Viskositätsverhalten ist in der Praxis problematisch, da es sich beispielsweise durch Alterung der Hydraulikflüssigkeit ändern kann, oder durch die Vermengung mit anderen Hydraulikflüssigkeiten nach Reparaturen oder Wartung, mit der Folge, dass der in einer elektronischen Steuereinrichtung, die aus dem Signal des Volumenstromsensors den von der Hydraulikpumpe geförderten Volumenstrom ermittelt, hinterlegte Korrekturfaktor nicht mehr korrekt ist. Dies führt dazu, dass der mittels des Volumenstromsensors ermittelte Volumenstrom der Hydraulikpumpe von dem von der Hydraulikpumpe tatsächlich geförderten Ist-Volumenstrom abweicht, so dass es bei der Verwendung des mittels des Volumenstromsensors ermittelten Volumenstroms zur Pumpenregelung der Hydraulikpumpe zu entsprechenden Energieverlusten oder einer Unterversorgung der angesteuerten Verbraucher kommen kann.

Aus der DE 100 21 823 A1 ist eine gattungsgemäße mobile Arbeitsmaschine mit den Merkmalen des Oberbegriffs des Patentanspruchs 1 bekannt.

Die US 11 209 029 B2 offenbart ein Hydraulikaggregat-System.

Aus der US 2014/165692 A1 ist ein Verfahren bekannt, mit dem Drucksensoren und Positionssensoren in einem Hydrauliksystem einer mobilen Arbeitsmaschine rekalibriert werden können.

Die US 2011/126608 A1 offenbart ein Hydrauliksystem mit Drucksensoren und einer Rekalibrierung der Drucksensoren.

Die DE 10 2009 056 673 B4 offenbart ein hydraulisches System und ein Verfahren zur Kalibrierung eines Drucksensors.

Der vorliegenden Erfindung liegt die Aufgabe zugrunde, eine Arbeitsmaschine der eingangs genannten Art zur Verfügung zu stellen, die eine Kompensation für die Viskositätsabhängigkeit des Messergebnisses eines Volumenstromsensors ermöglicht und eine Berücksichtigung einer Änderung des Temperatur-Viskositätsverhaltens der Hydraulikflüssigkeit im Einsatz der Arbeitsmaschine ermöglicht.

Diese Aufgabe wird erfindungsgemäß dadurch gelöst, dass die elektronische Steuereinrichtung ausgebildet ist, eine Kalibrierung des in der Arbeitsmaschine eingebauten Volumenstromsensors durchzuführen, wobei die Steuereinrichtung ausgebildet ist, bei der Kalibrierung des Volumenstromsensors den mittels des Volumenstromsensors ermittelten Volumenstrom mit einer mittels einer Sensoreinrichtung erfassten Betätigung des Verbrauchers, insbesondere mit einer mittels einer Sensoreinrichtung erfassten Betätigungsgeschwindigkeit des Verbrauchers, abzugleichen.

Die elektronische Steuereinrichtung, die anhand des Signals des Volumenstromsensors den von der Hydraulikpumpe geförderten Volumenstrom ermittelt, ist somit ausgebildet, eine Kalibrierung des in der Arbeitsmaschine eingebauten Volumenstromsensors durchzuführen. Die Kalibrierung des in der Arbeitsmaschine eingebauten Volumenstromsensors mittels der elektronischen Steuereinrichtung ermöglicht es, in regelmäßigen oder unregelmäßigen zeitlichen Abständen eine maschineninterne Kalibrierung des Volumenstromsensors im Betrieb der Arbeitsmaschine durchzuführen. Hierdurch können Änderungen des Temperatur-Viskositätsverhaltens der Hydraulikflüssigkeit im Einsatz der Arbeitsmaschine in einfacher Weise berücksichtigt werden und die Viskositätsabhängigkeit des Messergebnisses des Volumenstromsensors auch bei einer Änderung des Temperatur-Viskositätsverhaltens der Hydraulikflüssigkeit im Einsatz der Arbeitsmaschine kompensiert werden. Die Kalibrierung des in der Arbeitsmaschine eingebauten Volumenstromsensors ermöglicht es somit, die Abweichungen des Messwerts, d.h. des ermittelten Volumenstroms der Hydraulikpumpe, des Volumenstromsensors vom Ist-Volumenstrom der Pumpe zu minimieren, so dass mit einer entsprechenden Pumpenregelung auf Basis des mit dem Volumenstromsensor ermittelten Volumenstroms der Hydraulikpumpe Energieverluste verringert werden können und eine Unterversorgung der angesteuerten Verbraucher vermieden werden kann.

Gemäß einer vorteilhaften Ausgestaltungsform der Erfindung steht die Steuereinrichtung mit einem die Temperatur der Hydraulikflüssigkeit erfassenden Temperatursensor in Verbindung, wobei die Steuereinrichtung ausgebildet ist, das von dem Volumenstromsensor gelieferte Signal mittels eines Korrekturfaktors zu berichtigen. Das Temperatur-Viskositätsverhaltens der Hydraulikflüssigkeit und dessen Veränderung im Einsatz der Arbeitsmaschine können mit einem Korrekturfaktor in einfacher Weise berücksichtigt werden, um aus dem Signal des Volumenstromsensors in der elektronischen Steuereinrichtung den Volumenstrom der Hydraulikpumpe ermitteln zu können.

Gemäß der Erfindung ist die Steuereinrichtung ausgebildet, bei der Kalibrierung des Volumenstromsensors den mittels des Volumenstromsensors ermittelten Volumenstrom mit einer mittels einer Sensoreinrichtung erfassten Betätigung des Verbrauchers, insbesondere mit einer mittels einer Sensoreinrichtung erfassten Betätigungsgeschwindigkeit des Verbrauchers, abzugleichen. Bei der Kalibrierung des Volumenstromsensors wird somit der mittels des Signals des Volumenstromsensors ermittelte Volumenstrom mit der resultierenden, von der Sensoreinrichtung erfassten Betätigung, beispielsweise der Bewegung, des Verbrauchers bzw. mit der resultierenden, von der Sensoreinrichtung erfassten Betätigungsgeschwindigkeit, beispielsweise der Bewegungsgeschwindigkeit, des Verbrauchers abgeglichen.

Die Steuereinrichtung ist hierzu gemäß einer vorteilhaften Ausführungsform der Erfindung ausgebildet, bei der Kalibrierung des Volumenstromsensors aus der mittels der Sensoreinrichtung erfassten Betätigung des Verbrauchers, insbesondere der mittels einer Sensoreinrichtung erfassten Betätigungsgeschwindigkeit des Verbrauchers, den von der Hydraulikpumpe geförderten Ist-Volumenstrom zu ermitteln und den mittels des Volumenstromsensors ermittelten Volumenstrom mit dem mittels der Sensoreinrichtung ermittelten Ist-Volumenstrom zu vergleichen. Aus der Betätigung des Verbrauchers bzw. der Betätigungsgeschwindigkeit des Verbrauchers kann bei bekannten geometrischen Eigenschaften des Verbrauchers, beispielsweise eines Hydraulikzylinders oder eines Hydraulikmotors, in einfacher Weise der Ist-Volumenstrom der Hydraulikpumpe berechnet werden, der zu dieser Betätigung bzw. dieser Betätigungsgeschwindigkeit des Verbrauchers führt. Abweichungen zwischen dem mittels des Volumenstromsensors ermittelten Volumenstrom der Hydraulikpumpe und dem mittels der Sensoreinrichtung ermittelten, von der Hydraulikpumpe tatsächlich geförderten Ist-Volumenstrom können somit in einfacher Weise ermittelt werden, so dass der mittels des Volumenstromsensors ermittelte Volumenstrom mit dem mittels der Sensoreinrichtung erfassten Ist-Volumenstrom der Hydraulikpumpe abgeglichen werden kann und die Verarbeitung des Signals des Volumenstromsensors derart verändert werden kann, dass der mittels des Volumenstromsensors ermittelten Volumenstrom dem Ist-Volumenstrom entspricht.

Gemäß einer vorteilhaften Ausgestaltungsform der Erfindung ist die Steuereinrichtung ausgebildet ist, bei der Kalibrierung des Volumenstromsensors den Korrekturfaktor anzupassen. Durch eine entsprechende Veränderung und Anpassung des Korrekturfaktors kann bei der Kalibrierung des Volumenstromsensors in einfacher Weise erzielt werden, dass der mittels des Volumenstromsensors ermittelte Volumenstrom dem von der Hydraulikpumpe geförderten Ist-Volumenstrom entspricht.

Gemäß einer vorteilhaften Ausgestaltungsform der Erfindung ist der Verbraucher als hydraulische Lenkungseinrichtung ausgebildet und ist die Sensoreinrichtung als Lenksensor, insbesondere Lenkwinkelsensor, ausgebildet. Der Lenksensor ist bevorzugt ausgebildet, eine Betätigungsgeschwindigkeit eines hydraulischen Lenkzylinders der Lenkungseinrichtung zu erfassen. Bei der Kalibrierung des Volumenstromsensors im Betrieb der Arbeitsmaschine wird hierbei insbesondere der mit dem Volumenstromsensor ermittelte Volumenstrom mit dem resultierenden, von dem Lenksensor erfassten Lenkbewegung oder Lenkbewegungsgeschwindigkeit eines Lenkzylinders der Lenkungseinrichtung abgeglichen.

Gemäß einer vorteilhaften Ausgestaltungsform der Erfindung ist der Verbraucher als hydraulischer Hubantrieb eines Lastaufnahmemittels ausgebildet und ist die Sensoreinrichtung als Hubhöhensensor ausgebildet. Der Huhböhensensor ist bevorzugt ausgebildet, eine Betätigungsgeschwindigkeit eines hydraulischen Hubzylinders des Hubantriebs zu erfassen. Bei der Kalibrierung des Volumenstromsensors im Betrieb der Arbeitsmaschine wird hierbei insbesondere der mit dem Volumenstromsensor ermittelte Volumenstrom mit der resultierenden, von dem Hubhöhensensor erfassten Hebenbewegung oder Hebengeschwindigkeit eines Hubzylinders des Hubantriebs oder des Lastaufnahmemittels abgeglichen.

Gemäß einer vorteilhaften Ausgestaltungsform der Erfindung ist der Verbraucher als hydraulischer Neigeantrieb eines Hubgerüstes ausgebildet und ist die Sensoreinrichtung als Neigesensor, insbesondere Neigewinkelsensor, ausgebildet. Der Neigesensor ist bevorzugt ausgebildet, eine Betätigungsgeschwindigkeit eines hydraulischen Neigezylinders des Neigeantriebs zu erfassen. Bei der Kalibrierung des Volumenstromsensors im Betrieb der Arbeitsmaschine wird hierbei insbesondere der mit dem Volumenstromsensor ermittelte Volumenstrom mit der resultierenden, von dem Neigesensor erfassten Neigebewegung oder Neigegeschwindigkeit eines Neigezylinders des Neigeantriebs oder des Hubgerüstes abgeglichen.

Gemäß einer vorteilhaften Ausgestaltungsform der Erfindung ist die Steuereinrichtung ausgebildet, die Kalibrierung des Volumenstromsensors in Betriebszuständen durchzuführen, in denen eine singuläre Betätigung eines einzigen Verbrauchers erfolgt. Bevorzugt erfolgt die Kalibrierung des Volumenstromsensors somit in Betriebszuständen, die eine eindeutige und singuläre Betätigung nur eines einzigen Verbrauchers bieten, beispielsweise einem Heben mit dem Hubantrieb mit maximaler Hebengeschwindigkeit, wodurch mittels der Sensoreinrichtung und einer geeigneten Weg- und Zeitmessung in einfacher Weise die Betätigungsgeschwindigkeit des Verbrauchers bestimmt und durch Umrechnung daraus der Ist-Volumenstrom der Hydraulikpumpe berechnet werden kann.

Gemäß einer vorteilhaften Ausgestaltungsform der Erfindung kann die Steuereinrichtung ausgebildet sein, die Kalibrierung des Volumenstromsensors in Betriebszuständen durchzuführen, in denen eine gleichzeitige Betätigung mehrerer Verbraucher erfolgt. Sofern die Kalibrierung des Volumenstromsensors bei mehreren, gleichzeitig betätigten Verbrauchern erfolgt, werden vorteilhaft die zugehörigen Bewegungen aller betätigten Verbraucher erfasst, um die Betätigungsgeschwindigkeit aller betätigter Verbrauchers bestimmen und durch Umrechnung daraus den Ist-Volumenstrom der Hydraulikpumpe berechnet zu können.

Gemäß einer vorteilhaften Ausgestaltungsform der Erfindung ist der Volumenstromsensor als Messturbine mit einem von dem Volumenstrom angetriebenen Flügelrad ausgebildet. Eine derartige Messturbine weist wenig Bauraum, eine hohe Messdynamik und geringe Durchflussverluste auf und ist kostengünstig. Durch die erfindungsgemäße Kalibrierung der Messturbine im Einsatz der Arbeitsmaschine kann mit der Messturbine auch bei einem sich veränderten Temperatur-Viskositätsverhaltens der Hydraulikflüssigkeit im Einsatz der Arbeitsmaschine eine Messung des Volumenstroms der Hydraulikpumpe mit hoher Genauigkeit erzielt werden.

Gemäß einer vorteilhaften Ausgestaltungsform der Erfindung ist die Steuereinrichtung ausgebildet, den mittels des Volumenstromsensors ermittelten Volumenstrom der Hydraulikpumpe als Kenngröße zur Regelung des Fördervolumens der Hydraulikpumpe zu verwenden. Mit der erfindungsgemäßen Kalibrierung des Volumenstromsensors können im Einsatz der Arbeitsmaschine geringe Abweichungen des mittels der Volumenstromsensors ermittelten Volumenstroms der Hydraulikpumpe vom tatsächlich von der Hydraulikpumpe geförderten Ist-Volumenstrom erzielt werden, so dass mit einer entsprechenden Pumpenregelung auf Basis des mit dem Volumenstromsensor ermittelten Volumenstroms der von Hydraulikpumpe gelieferte Volumenstrom mit hoher Genauigkeit an den von den Verbrauchern angeforderten Volumenstrom eingestellt werden kann, so dass Energieverluste verringert werden können und eine Unterversorgung der angesteuerten Verbraucher sicher vermieden werden kann.

Die Erfindung weist eine Reihe von Vorteilen auf.

Die Erfindung ermöglicht eine exakte Ermittlung des von der Hydraulikpumpe gelieferten Volumenstroms. Mit der Nutzung einer exakten Volumenstromermittlung kann die Förderleistung der Hydraulikpumpe genau an die Anforderung der angesteuerten Verbraucher angepasst werden, was den Energieverbrauch der Arbeitsmaschine verringert.

Durch die Verwendung des mittels des Volumenstromsensors ermittelten Volumenstroms der Hydraulikpumpe als Stellgröße/Kenngröße für eine Pumpenregelung werden Streuungen der Pumpenfördermenge aus Toleranzen der Hydraulikpumpe und gegebenenfalls ihrer Fördervolumenverstellung ausgeglichen und müssen nicht vorgehalten werden, was ebenfalls Energie einspart.

Die Erfindung mit der Kalibrierung des Volumenstromsensors im Einsatz der Arbeitsmaschine ermöglicht die Verwendung eines Volumenstromsensors auf Basis einer Messturbine mit ihren Vorteilen bei gleichzeitiger Minimierung ihrer Nachteile durch die Viskositätsabhängigkeit des Messverfahrens.

Mit der Erfindung und der Kalibrierung des Volumenstromsensors im Einsatz der Arbeitsmaschine können Störeinflüsse, beispielsweise Verschleiß der Hydraulikpumpe, Änderung der Viskositätseigenschaften der Hydraulikflüssigkeit, Vermischung oder Wechsel der Hydraulikflüssigkeit in der Pumpenansteuerung oder -regelung in einfacher Weise ausgeglichen werden.

Mit der Erfindung kann in einfacher Weise eine ausreichende, hydraulische Energieversorgung einer hydraulischen Lenkungseinrichtung mit der Volumenstromermittlung mittels eines Volumenstromsensors erzielt werden, wodurch sich Vorteile ergeben, wenn die Lenkungseinrichtung als elektrohydraulische Lenkung ausgebildet ist.

Sofern für die Kalibrierung des Volumenstromsensors eine Sensoreinrichtung verwendet wird, die bereits für andere Funktionen in der mobilen Arbeitsmaschine installiert ist, beispielsweise ein Hubhöhensensor, ein Neigesensor eines Hubgerüstes und/oder ein Lenksensor, ist für die Kalibrierung keine zusätzliche Sensoreinrichtung zu installieren und die Kalibrierung des Volumenstromsensors kann in der elektronischen Steuereinrichtung in einfacher Weise durch entsprechende Berechnungen durchgeführt werden.

Starke oder unplausible Abweichungen zwischen dem von der Steuereinrichtung bei der Betätigung eines oder mehrerer Verbraucher vorgegebenen Volumenstrom der Hydraulikpumpe und dem mittels des Volumenstromsensors ermittelten Volumenstrom können erfasst werden und als Hinweise für die Wartung verwendet werden, so dass eine Instandsetzung vor Ausfall der verursachenden Komponente möglich ist.

Die Änderung des Verhältnisses zwischen Soll- und Ist-Volumenströmen können aufgezeichnet werden und Trends, beispielsweise zum Verschleiß der Hydraulikpumpe, erstellt werden, was im Rahmen einer Predictive Maintenance genutzt werden kann.

Weitere Vorteile und Einzelheiten der Erfindung werden anhand des in der schematischen Figur dargestellten Ausführungsbeispiels näher erläutert.

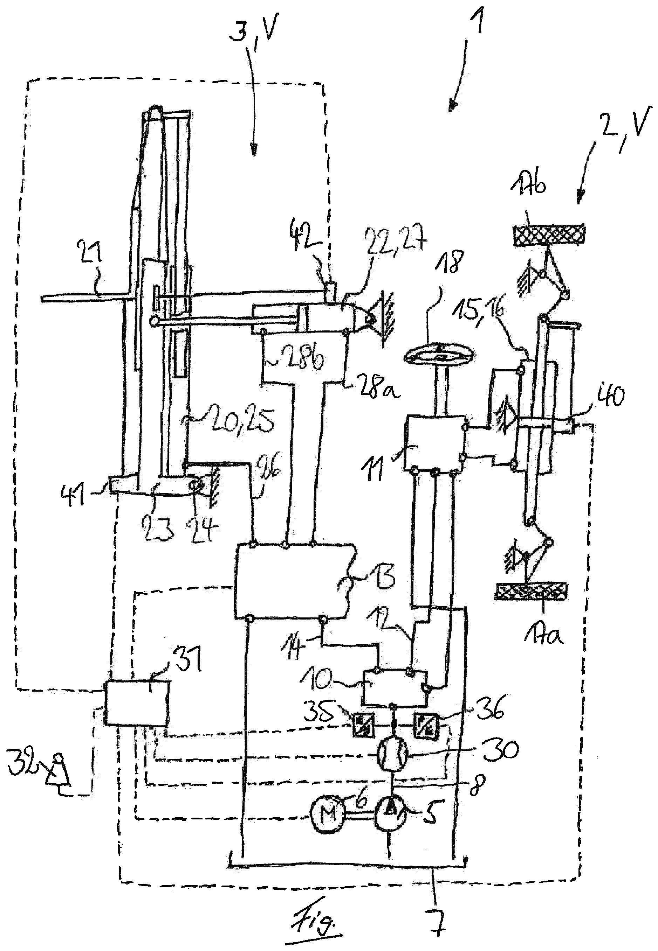

In der Figur ist ein Schaltplan eines Hydrauliksystems 1 einer erfindungsgemäßen mobilen Arbeitsmaschine, beispielsweise eines Flurförderzeugs, gezeigt.

Das Hydrauliksystems 1 der mobilen Arbeitsmaschine weist als hydraulische Verbraucher V eine hydraulische Lenkungseinrichtung 2 und eine Arbeitshydraulik 3 auf.

Zur Versorgung der hydraulischen Verbraucher V ist eine Hydraulikpumpe 5 vorgesehen, die von einem Antriebsmotor 6 angetrieben ist. Im dargestellten Ausführungsbeispiel ist der Antriebsmotor 6 als Elektromotor ausgebildet.

Die Hydraulikpumpe 5 ist im offenen Kreislauf betrieben und saugt Hydraulikflüssigkeit aus einem Behälter 7 an und fördert dieses in eine Förderleitung 8.

In der Förderleitung 8 ist zur bevorzugten Versorgung der Lenkungseinrichtung 2 ein Prioritätsventil 10 angeordnet. Das Prioritätsventil 10 ist eingangsseitig mit der Förderleitung 8 der Hydraulikpumpe 5 verbunden. Ausgangsseitig ist an das Prioritätsventil 10 eine zu einem Lenkventil 11 der Lenkungseinrichtung 2 geführte Versorgungsleitung 12 als vorrangig mit Druckmittel versorgter Verbraucher angeschlossen. Ausgangsseitig ist an das Prioritätsventil 8 weiterhin eine zu einem Wegeventilblock 13 der Arbeitshydraulik 2 geführte Versorgungsleitung 14 angeschlossen.

Das Lenkventil 11 steuert einen hydraulischen Aktuator 15 der Lenkungseinrichtung 2, der im dargestellten Ausführungsbeispiel als hydraulischer Lenkzylinder 16 ausgebildet ist und der mit dem mindestens einem gelenkten Rad 17a, 17b der Arbeitsmaschine zu dessen Lenkung in Wirkverbindung steht. Das Lenkventil 11 ist mittels eines Bedienelements 18, beispielsweise eine Lenkrades, betätigbar.

Die Arbeitshydraulik 3 umfasst bei einem als Gabelstapler ausgebildeten Flurförderzeug mehrere hydraulische Antriebe. Im dargestellten Ausführungsbeispiel umfasst die Arbeitshydraulik 3 einen hydraulischen Hubantrieb 20, mit dem ein Lastaufnahmemittel 21 angehoben und abgesenkt werden kann. Im dargestellten Ausführungsbeispiel umfasst die Arbeitshydraulik 3 weiterhin einen hydraulischen Neigeantrieb 22, mit dem ein Hubgerüst 23, an dem das Lastaufnahmemittel 21 mittels des Hubantriebs 20 anhebbar und absenkbar angeordnet ist, um eine horizontale Neigeachse 24 geneigt werden kann.

Der Hubantrieb 20 umfasst im dargestellten Ausführungsbeispiel einen Hubzylinder 25, der mittels einer Verbindungsleitung 26 mit dem Wegeventilblock 13 verbunden ist.

Der Neigeantrieb 22 umfasst im dargestellten Ausführungsbeispiel einen Neigezylinder 27, der mittels Verbindungsleitungen 28a, 28b mit dem Wegeventilblock 13 verbunden ist.

In der Förderleitung 8 der Hydraulikpumpe 5 ist ein Volumenstromsensor 30 angeordnet, der mit einer elektronischen Steuereinrichtung 31 in Verbindung steht. Die elektronische Steuereinrichtung 31 ist ausgebildet, anhand des Signals des Volumenstromsensors 30 den von der Hydraulikpumpe 5 geförderten Volumenstrom zu ermitteln. Der Volumenstromsensor 30 ist bevorzugt als Messturbine mit einem Flügelrad ausgebildet, das von dem in der Förderleitung 8 strömenden Volumenstrom angetriebenen ist.

Die Steuereinrichtung 31 steht weiterhin mit einem Bedienelement 32 in Verbindung, beispielsweise einem Joystick, mit dem ein Fahrer der Arbeitsmaschine entsprechende Vorgaben zur Betätigung des Hubantriebs 20 und des Neigeantrieb 22 durchführen kann. Die Steuereinrichtung 31 steuert hierzu im Wegeventilblock 13 angeordnete Steuerwegeventile an, mit denen der Hubantrieb 20 und der Neigeantrieb 22 steuerbar sind.

Die Steuereinrichtung 31 steht mit dem Antriebsmotor 6 der Hydraulikpumpe 5 zu dessen Ansteuerung in Verbindung.

Die Steuereinrichtung 31 steht weiterhin mit einem Temperatursensor 35 in Verbindung, der ausgebildet ist, die aktuelle Temperatur der Hydraulikflüssigkeit zu erfassen.

Im dargestellten Ausführungsbeispiel steht die Steuereinrichtung 31 weiterhin mit einem Drucksensor 36 in Verbindung, der ausgebildet ist, den Förderdruck der Hydraulikpumpe 5 in der Förderleitung 8 zu erfassen.

Die Steuereinrichtung 31 steht weiterhin mit einer als Lenksensor ausgebildeten Sensoreinrichtung 40 in Verbindung, die ausgebildet ist, die Betätigung, beispielsweise die Betätigungsgeschwindigkeit, des Lenkzylinders 16 zu erfassen.

Die Steuereinrichtung 31 steht weiterhin mit einer als Hubhöhensensor ausgebildeten Sensoreinrichtung 41 in Verbindung, die ausgebildet ist, die Betätigung, beispielsweise die Betätigungsgeschwindigkeit, beispielsweise die Hebengeschwindigkeit, des Hubzylinders 25 oder des Lastaufnahmemittels 21 zu erfassen.

Die Steuereinrichtung 31 steht weiterhin mit einer als Neigesensor ausgebildeten Sensoreinrichtung 42 in Verbindung, die ausgebildet ist, die Betätigung, beispielsweise die Betätigungsgeschwindigkeit, des Neigezylinders 27 zu erfassen.

Bei einer Betätigung des Bedienelements 32 und/oder des Bedienelements 18 ermittelt die Steuereinrichtung 31 entsprechend der Betätigung des Bedienelements 32 bzw. 18 einen Volumenstrombedarf der angesteuerten Verbraucher der Arbeitshydraulik 3 und/oder der Lenkungseinrichtung 2 und steuert die Drehzahl des Antriebsmotors 6 derart, dass die Hydraulikpumpe 5 den ermittelten Volumenstrombedarf fördert. Mittels des Signals des Volumenstromsensors 30 ermittelt die Steuereinrichtung 31 den von der Hydraulikpumpe 5 in der Förderleitung 8 geförderten Volumenstrom. Den mittels des Volumenstromsensors 30 ermittelten Volumenstrom der Hydraulikpumpe 5 nutzt die Steuereinrichtung 31 als Kenngröße zur Regelung der Drehzahl des Antriebsmotors 6 der Hydraulikpumpe 5, so dass die Hydraulikpumpe 5 den Volumenstrombedarf der angesteuerten Verbraucher in die Förderleitung 8 fördert.

Die Steuereinrichtung 31 erfasst weiterhin mit dem Temperatursensor 35 die aktuelle Temperatur der Hydraulikflüssigkeit und berichtigt das Signal des als Messturbine ausgebildeten Volumenstromsensors 30 mittels eines in der Steuereinrichtung 31 hinterlegten Korrekturfaktors, um die Auswirkungen der Viskosität der Hydraulikflüssigkeit auf das Messergebnis des als Messturbine ausgebildeter Volumenstromsensors 30 zu verringern.

Während des Einsatzes der Arbeitsmaschine kann sich durch Alterung der Hydraulikflüssigkeit oder durch die Vermengung mit anderen Hydraulikflüssigkeiten nach einer Reparatur oder Wartung das Temperatur-Viskositätsverhalten der Hydraulikflüssigkeit verändern, mit der Folge, dass der in der elektronischen Steuereinrichtung 31 hinterlegte Korrekturfaktor nicht mehr korrekt ist. Dies führt dazu, dass der mittels des Volumenstromsensors 30 in der Steuereinrichtung 31 ermittelte Volumenstrom der Hydraulikpumpe 5 von dem von der Hydraulikpumpe 5 tatsächlich in der Förderleitung 8 geförderten Ist-Volumenstrom abweicht.

Um diesen Effekt zu kompensieren, ist die Steuereinrichtung 31 ausgebildet, eine Kalibrierung des in der Arbeitsmaschine eingebauten Volumenstromsensors 30 durchzuführen. Die Steuereinrichtung 31 führt somit in regelmäßigen oder unregelmäßigen zeitlichen Abständen im Einsatz der Arbeitsmaschine eine maschineninterne Kalibrierung des Volumenstromsensors 30 durch, um die Abweichungen des mittels des Signals des Volumenstromsensors 30 ermittelten Volumenstroms der Hydraulikpumpe 5 von dem tatsächlich von der Hydraulikpumpe 5 geförderten Ist-Volumenstrom zu minimieren.

Die Steuereinrichtung 31 ist hierzu ausgebildet, bei der Kalibrierung des Volumenstromsensors 30 den mittels des Volumenstromsensors 30 ermittelten Volumenstrom mit einer mittels der Sensoreinrichtung 40, 41, 42 erfassten Betätigung des Verbrauchers V, bevorzugt einer mittels der Sensoreinrichtung 40 ,41, 42 erfassten Betätigungsgeschwindigkeit des Verbrauchers V, abzugleichen.

Die Steuereinrichtung 31 ist hierzu ausgebildet, bei der Kalibrierung des Volumenstromsensors 30 aus der mittels der Sensoreinrichtung 40, 41, 42 erfassten Betätigung des Verbrauchers V, bevorzugt der mittels der Sensoreinrichtung 40, 41, 42 erfassten Betätigungsgeschwindigkeit des Verbrauchers V, den von der Hydraulikpumpe 5 geförderten Ist-Volumenstrom zu ermitteln und den mittels des Volumenstromsensors 30 ermittelten Volumenstrom mit dem mittels der Sensoreinrichtung 40, 41, 42 ermittelten Ist-Volumenstrom zu vergleichen.

Bei einer erkannten Abweichung des mittels des Volumenstromsensors 30 ermittelten Volumenstroms von dem mittels der Sensoreinrichtung 40, 41, 42 ermittelten Ist-Volumenstrom der Hydraulikpumpe 5 passt die Steuereinrichtung 31 für die Kalibrierung des Volumenstromsensors 30 den Korrekturfaktor an. Unter Verwendung des mit der Kalibrierung angepassten Korrekturfaktors kann somit die Steuereinrichtung 31 mit dem Signal des als Messturbine ausgebildeten Volumenstromsensors 30 einen Volumenstrom als Messergebnis des Volumenstromsensors 30 berechnen, der dem tatsächlich in der Förderleitung 8 geförderten Ist-Volumenstrom der Hydraulikpume 5 entspricht.

Die Kalibrierung des Volumenstromsensors 30 kann beispielsweise bei einer Betätigung des Lenkzylinders 16 der Lenkungseinrichtung 2 erfolgen. Lenkt der Fahrer der Arbeitsmaschine, kann in der Steuereinrichtung 31 der mittels des Volumenstromsensors 30 ermittelte Volumenstrom mit der resultierenden, von der Sensoreinrichtung 40 erfassten Lenkbewegung abgeglichen werden. In Verbindung mit der von dem Temperatursensor 35 erfassten Temperatur der Hydraulikflüssigkeit kann der entsprechende Korrekturfaktor in der elektronischen Steuereinrichtung 31 angepasst werden.

Die Kalibrierung des Volumenstromsensors 30 kann alternativ oder zusätzlich bei einer Betätigung des Hubzylinders 25 des Hubantriebs 20 erfolgen. Betätigt der Fahrer der Arbeitsmaschine den Hubzylinder 25, kann in der Steuereinrichtung 31 der mittels des Volumenstromsensors 30 ermittelte Volumenstrom mit der resultierenden, von der Sensoreinrichtung 41 erfassten Betätigungsgeschwindigkeit, beispielsweise der Hebengeschwindigkeit, des Hubzylinders 25 abgeglichen werden. In Verbindung mit der von dem Temperatursensor 35 erfassten Temperatur der Hydraulikflüssigkeit kann der entsprechende Korrekturfaktor in der elektronischen Steuereinrichtung 31 angepasst werden.

Die Kalibrierung des Volumenstromsensors 30 kann alternativ oder zusätzlich bei einer Betätigung des Neigezylinders 27 des Neigeantriebs 22 erfolgen. Betätigt der Fahrer der Arbeitsmaschine den Neigezylinder 27, kann in der Steuereinrichtung 31 der mittels des Volumenstromsensors 30 ermittelte Volumenstrom mit der resultierenden, von der Sensoreinrichtung 42 erfassten Betätigungsgeschwindigkeit, beispielsweise der Neigegeschwindigkeit, des Neigezylinders 27 abgeglichen werden. In Verbindung mit der von dem Temperatursensor 35 erfassten Temperatur der Hydraulikflüssigkeit kann der entsprechende Korrekturfaktor in der elektronischen Steuereinrichtung 31 angepasst werden.

Die Steuereinrichtung 31 ist bevorzugt ausgebildet, die Kalibrierung des Volumenstromsensors 30 in Betriebszuständen durchzuführen, in denen eine eindeutige singuläre Betätigung eines einzigen Verbrauchers V erfolgt. Bei einer derartigen eindeutigen und singulären Betätigung eines Verbrauchers V vorausgesetzt, beispielsweise ein Heben mittels des Hubzylinders 25 mit maximaler Geschwindigkeit, kann von der Steuereinrichtung 31 über eine geeignete Zeit- sowie Wegmessung aus dem Signal der Sensoreinrichtung 40, 41, 42 die Betätigungsgeschwindigkeit des entsprechenden Verbrauchers V bestimmt werden und bei bekannten geometrischen Abmessungen des Verbrauchers V, beispielsweise der druckbeaufschlagten Fläche des entsprechenden Hydraulikzylinders 16, 25, 27, durch Umrechnung daraus der von der Hydraulikpumpe 5 geförderte tatsächliche Ist-Volumenstrom berechnet werden, der für die Kalibrierung des Volumenstromsensors 30 mit dem mittels des Volumenstromsensors 30 ermittelten Volumenstrom verglichen und abgeglichen wird.

Bei der Kalibrierung des Volumenstromsensors 30 wird von der elektronischen Steuereinrichtung 31 der Korrekturfaktor angepasst, den die Steuereinrichtung 31 verwendet, um den Volumenstrom der Hydraulikpumpe 5 für die Pumpenregelung zu berechnen. Der Korrekturfaktor wird von der Steuereinrichtung 31 korrigiert, in dem die beiden Messwerte des Volumenstromsensors 30 und der Sensoreinrichtung 40, 41, 42 miteinander verglichen werden. Für die Kalibrierung des Volumenstromsensors 30 ist es zweckmäßig und vorteilhaft, wenn während der vergleichenden Messung die Bewegung des Verbrauchers V konstant ist, so dass die mittels der Sensoreinrichtung 40, 41, 42 ermittelte Betätigungsgeschwindigkeit des Verbrauchers V und der daraus berechnete Volumenstrom ebenfalls konstant ist.

Sofern die die Kalibrierung des Volumenstromsensors 30 bei mehreren, gleichzeitig betätigten Verbrauchern V erfolgt, müssen alle zugehörigen Bewegungen der entsprechenden Verbraucher V erfasst werden und alle Bewegungen konstant sein.

## Patentansprüche

1. Mobile Arbeitsmaschine (1), insbesondere Flurförderzeug, mit mindestens einem hydraulischen Verbraucher (V), wobei eine Hydraulikpumpe (5) vorgesehen ist, die den Verbraucher (V) mit Hydraulikflüssigkeit versorgt, wobei eine elektronische Steuereinrichtung (31) vorgesehen ist, die mit einem in einer Förderleitung (8) der Hydraulikpumpe (5) angeordneten Volumenstromsensor (30) in Verbindung steht, wobei die elektronische Steuereinrichtung (31) ausgebildet ist, anhand des Signals des Volumenstromsensors (30) den von der Hydraulikpumpe (5) geförderten Volumenstrom zu ermitteln, **dadurch gekennzeichnet, dass** die Steuereinrichtung (31) ausgebildet ist, eine Kalibrierung des in der Arbeitsmaschine (1) eingebauten Volumenstromsensors (30) durchzuführen, wobei die Steuereinrichtung (31) ausgebildet ist, bei der Kalibrierung des Volumenstromsensors (30) den mittels des Volumenstromsensors (30) ermittelten Volumenstrom mit einer mittels einer Sensoreinrichtung (40; 41; 42) erfassten Betätigung des Verbrauchers (V), insbesondere mit einer mittels einer Sensoreinrichtung (40; 41; 42) erfassten Betätigungsgeschwindigkeit des Verbrauchers (V), abzugleichen.

2. Mobile Arbeitsmaschine nach Anspruch 1, **dadurch gekennzeichnet, dass** die Steuereinrichtung (31) mit einem die Temperatur der Hydraulikflüssigkeit erfassenden Temperatursensor (35) in Verbindung steht, wobei die Steuereinrichtung (31) ausgebildet ist, das von dem Volumenstromsensor (30) gelieferte Signal mittels eines Korrekturfaktors zu berichtigen.

3. Mobile Arbeitsmaschine nach Anspruch 1 oder 2, **dadurch gekennzeichnet, dass** die Steuereinrichtung (31) ausgebildet ist, bei der Kalibrierung des Volumenstromsensors (30) aus der mittels der Sensoreinrichtung (40; 41; 42) erfassten Betätigung des Verbrauchers (V), insbesondere der mittels einer Sensoreinrichtung (40; 41; 42) erfassten Betätigungsgeschwindigkeit des Verbrauchers (V), den von der Hydraulikpumpe (5) geförderten Ist-Volumenstrom zu ermitteln und den mittels des Volumenstromsensors (30) ermittelten Volumenstrom mit dem mittels der Sensoreinrichtung (40; 41; 42) ermittelten Ist-Volumenstrom zu vergleichen.

4. Mobile Arbeitsmaschine nach Anspruch 2 oder 3, wenn Anspruch 3 rückbezogen auf Anspruch 2 ist, **dadurch gekennzeichnet, dass** die Steuereinrichtung (31) ausgebildet ist, bei der Kalibrierung des Volumenstromsensors (30) den Korrekturfaktor anzupassen.

5. Mobile Arbeitsmaschine nach einem der Ansprüche 1 bis 4, **dadurch gekennzeichnet, dass** der Verbraucher (V) als hydraulische Lenkungseinrichtung (2) ausgebildet ist und die Sensoreinrichtung (40) als Lenksensor, insbesondere Lenkwinkelsensor, ausgebildet ist.

6. Mobile Arbeitsmaschine nach einem der Ansprüche 1 bis 5, **dadurch gekennzeichnet, dass** der Verbraucher (V) als hydraulischer Hubantrieb (20) eines Lastaufnahmemittels (21) ausgebildet ist und die Sensoreinrichtung (41) als Hubhöhensensor ausgebildet ist.

7. Mobile Arbeitsmaschine nach einem der Ansprüche 1 bis 6, **dadurch gekennzeichnet, dass** der Verbraucher (V) als hydraulischer Neigeantrieb (22) eines Hubgerüstes (23) ausgebildet ist und die Sensoreinrichtung (42) als Neigesensor, insbesondere Neigewinkelsensor, ausgebildet ist.

8. Mobile Arbeitsmaschine nach einem der Ansprüche 1 bis 7, **dadurch gekennzeichnet, dass** die Steuereinrichtung (31) ausgebildet ist, die Kalibrierung des Volumenstromsensors (30) in Betriebszuständen durchzuführen, in denen eine singuläre Betätigung eines einzigen Verbrauchers (V) erfolgt.

9. Mobile Arbeitsmaschine nach einem der Ansprüche 1 bis 7, **dadurch gekennzeichnet, dass** die Steuereinrichtung (31) ausgebildet ist, die Kalibrierung des Volumenstromsensors (30) in Betriebszuständen durchzuführen, in denen eine Betätigung mehrerer Verbraucher (V) gleichzeitig erfolgt.

10. Mobile Arbeitsmaschine nach einem der Ansprüche 1 bis 9, **dadurch gekennzeichnet, dass** der Volumenstromsensor (30) als Messturbine mit einem von dem Volumenstrom angetriebenen Flügelrad ausgebildet ist.

11. Mobile Arbeitsmaschine nach einem der Ansprüche 1 bis 10, **dadurch gekennzeichnet, dass** die Steuereinrichtung (31) ausgebildet ist, den mittels des Volumenstromsensors (30) ermittelten Volumenstrom der Hydraulikpumpe (5) als Kenngröße zur Regelung des Fördervolumens der Hydraulikpumpe (5) zu verwenden.

## Claims

1. Mobile work machine (1), in particular an industrial truck, having at least one hydraulic consumer (V), wherein a hydraulic pump (5) is provided and supplies the consumer (V) with hydraulic fluid, wherein an electronic control device (31) is provided and is connected to a volumetric flow sensor (30) arranged in a conveying line (8) of the hydraulic pump (5), wherein the electronic control device (31) is configured to determine the volumetric flow conveyed by the hydraulic pump (5) based on the signal from the volumetric flow sensor (30), **characterized in that** the control device (31) is configured to calibrate the volumetric flow sensor (30) installed in the work machine (1), wherein the control device (31) is configured, during the calibration of the volumetric flow sensor (30), to compare the volumetric flow determined by means of the volumetric flow sensor (30) with actuation of the consumer (V) detected by means of a sensor device (40; 41; 42), in particular with an actuation speed of the consumer (V) detected by means of a sensor device (40; 41; 42).

2. Mobile work machine according to Claim 1, **characterized in that** the control device (31) is connected to a temperature sensor (35) detecting the temperature of the hydraulic fluid, wherein the control device (31) is configured to correct the signal supplied by the volumetric flow sensor (30) by means of a correction factor.

3. Mobile work machine according to Claim 1 or 2, **characterized in that** the control device (31) is configured, during the calibration of the volumetric flow sensor (30), to determine the actual volumetric flow conveyed by the hydraulic pump (5) from the actuation of the consumer (V) detected by means of the sensor device (40; 41; 42), in particular from the actuation speed of the consumer (V) detected by means of a sensor device (40; 41; 42), and to compare the volumetric flow determined by means of the volumetric flow sensor (30) with the actual volumetric flow determined by means of the sensor device (40; 41; 42).

4. Mobile work machine according to Claim 2 or 3, if Claim 3 refers back to Claim 2, **characterized in that** the control device (31) is configured to adapt the correction factor during the calibration of the volumetric flow sensor (30).

5. Mobile work machine according to one of Claims 1 to 4, **characterized in that** the consumer (V) is in the form of a hydraulic steering device (2) and the sensor device (40) is in the form of a steering sensor, in particular a steering angle sensor.

6. Mobile work machine according to one of Claims 1 to 5, **characterized in that** the consumer (V) is in the form of a hydraulic lifting drive (20) of a load-bearing means (21) and the sensor device (41) is in the form of a lifting height sensor.

7. Mobile work machine according to one of Claims 1 to 6, **characterized in that** the consumer (V) is in the form of a hydraulic tilt drive (22) of a lifting frame (23) and the sensor device (42) is in the form of a tilt sensor, in particular a tilt angle sensor.

8. Mobile work machine according to one of Claims 1 to 7, **characterized in that** the control device (31) is configured to calibrate the volumetric flow sensor (30) in operating states in which a single consumer (V) is singularly actuated.

9. Mobile work machine according to one of Claims 1 to 7, **characterized in that** the control device (31) is configured to calibrate the volumetric flow sensor (30) in operating states in which a plurality of consumers (V) are actuated at the same time.

10. Mobile work machine according to one of Claims 1 to 9, **characterized in that** the volumetric flow sensor (30) is in the form of a measuring turbine with an impeller driven by the volumetric flow.

11. Mobile work machine according to one of Claims 1 to 10, **characterized in that** the control device (31) is configured to use the volumetric flow of the hydraulic pump (5) determined by means of the volumetric flow sensor (30) as a characteristic variable for controlling the conveying volume of the hydraulic pump (5).

## Revendications

1. Machine de travail mobile (1), en particulier chariot de manutention, comportant au moins un consommateur hydraulique (V), une pompe hydraulique (5) étant prévue pour alimenter le consommateur (V) en fluide hydraulique, un dispositif de commande électronique (31) étant prévu, qui est relié à un capteur de débit volumique (30) agencé dans une conduite d'alimentation (8) de la pompe hydraulique (5), le dispositif de commande électronique (31) étant conçu pour déterminer, à partir du signal du capteur de débit volumique (30), le débit volumique délivré par la pompe hydraulique (5), **caractérisée en ce que** le dispositif de commande (31) est conçu pour effectuer un étalonnage du capteur de débit volumique (30) monté dans la machine de travail (1), le dispositif de commande (31) étant conçu pour, lors de l'étalonnage du capteur de débit volumique (30), comparer le débit volumique déterminé au moyen du capteur de débit volumique (30) avec une action du consommateur (V) détectée au moyen d'un dispositif capteur (40 ; 41 ; 42), en particulier une vitesse d'actionnement du consommateur (V) détectée au moyen d'un dispositif capteur (40 ; 41 ; 42).

2. Machine de travail mobile selon la revendication 1, **caractérisée en ce que** le dispositif de commande (31) est relié à un capteur de température (35) détectant la température du fluide hydraulique, le dispositif de commande (31) étant conçu pour corriger le signal fourni par le capteur de débit volumique (30) en utilisant un facteur de correction.

3. Machine de travail mobile selon la revendication 1 ou la revendication 2, **caractérisée en ce que** le dispositif de commande (31) est conçu pour, lors de l'étalonnage du capteur de débit volumique (30), déterminer à partir de l'actionnement du consommateur (V) détecté au moyen du dispositif capteur (40 ; 41 ; 42), en particulier à partir de la vitesse d'actionnement du consommateur (V) détectée au moyen d'un dispositif capteur (40 ; 41 ; 42), le débit volumique réel délivré par la pompe hydraulique (5) et pour comparer le débit volumique déterminé au moyen du capteur de débit volumique (30) avec le débit volumique réel déterminé au moyen du dispositif capteur (40 ; 41 ; 42).

4. Machine de travail mobile selon la revendication 2 ou la revendication 3, lorsque la revendication 3 est rattachée à la revendication 2, **caractérisée en ce que** le dispositif de commande (31) est conçu pour adapter le facteur de correction lors de l'étalonnage du capteur de débit volumique (30).

5. Machine de travail mobile selon l'une des revendications 1 à 4, **caractérisée en ce que** le consommateur (V) est conçu sous la forme d'un dispositif de direction hydraulique (2) et le dispositif capteur (40) est conçu sous la forme d'un capteur de direction, en particulier d'un capteur d'angle de braquage.

6. Machine de travail mobile selon l'une des revendications 1 à 5, **caractérisée en ce que** le consommateur (V) est conçu sous la forme d'un entraînement de levage hydraulique (20) d'un moyen de prise de charge (21) et **en ce que** le dispositif capteur (41) est conçu sous la forme d'un capteur de hauteur de levage.

7. Machine de travail mobile selon l'une des revendications 1 à 6, **caractérisée en ce que** le consommateur (V) est conçu sous la forme d'un système hydraulique (22) d'entraînement en inclinaison d'un châssis de levage (23), et le dispositif capteur (42) est conçu sous la forme d'un capteur d'inclinaison, en particulier d'un capteur d'angle d'inclinaison.

8. Machine de travail mobile selon l'une des revendications 1 à 7, **caractérisée en ce que** le dispositif de commande (31) est conçu de façon à effectuer l'étalonnage du capteur de débit volumique (30) dans des états de fonctionnement dans lesquels un seul consommateur (V) est actionné de manière individuelle.

9. Machine de travail mobile selon l'une des revendications 1 à 7, **caractérisée en ce que** le dispositif de commande (31) est conçu de façon à effectuer l'étalonnage du capteur de débit volumique (30) dans des états de fonctionnement dans lesquels plusieurs consommateurs (V) sont actionnés simultanément.

10. Machine de travail mobile selon l'une des revendications 1 à 9, **caractérisée en ce que** le capteur de débit volumique (30) est conçu sous la forme d'une turbine de mesure avec une roue à ailettes entraînée par le débit volumique.

11. Machine de travail mobile selon l'une des revendications 1 à 10, **caractérisée en ce que** le dispositif de commande (31) est conçu de façon à utiliser le débit de la pompe hydraulique (5) déterminé au moyen du capteur de débit volumique (30) en tant que variable caractéristique pour réguler le débit de la pompe hydraulique (5).
